# EUROPEAN PATENT APPLICATION

(11) **EP 3 418 961 A1**
(43) Date of publication of application: **26.12.2018**
(21) Application number: 17177146.2
(22) Date of filing: 21.06.2017
(51) Int. Cl.: G06Q 20/18, G06Q 20/32, G06Q 20/40

(54) **COMPUTER IMPLEMENTED METHOD FOR ALTERING THE STATUS OF A PAYMENT CARD FROM A WALLET APPLICATION**

(71) Applicant: MasterCard International Incorporated, Purchase NY New York 10577-2509 (US)
(72) Inventor: DEMARET, Anne, 1430 Walloon Brabant (BE); PHULWADE, Seema Ganpatrao, 411001 Maharashtra (IN); VAN DE WYNCKEL, Erik, 1060 Brussels-Capital Region (BE)
(74) Representative: Murgitroyd & Company

(57) **Abstract**

A method for altering the status of a payment card from a wallet application, the method comprising selecting, in the wallet application on a user terminal, a payment card entry corresponding to a payment card; selecting the designated status for the respective payment card; prompting user authentication; sending, from the user terminal to a card network, an update status request, the update status request containing at least a payment card identifier, the designated status and an authorisation indicator. An according user terminal, computer program product and computer readable medium are disclosed.

## Description

### Technical Field

The present disclosure relates to the field of fraud prevention in electronic payment. More particularly, the present disclosure relates to a method for altering the status of a payment card from a wallet application. Moreover, the disclosure relates to a computer program product and a computer readable medium. The computer readable medium comprises computer-executable instructions, which, when executed by the respective device(s) being equipped with processors causing the device(s) to perform the method steps of the disclosure on the respective device.

### Background

The use of financial transactions via electronic payment is constantly increasing. Often electronic payments are made via a payment card. Usually payment cards are designed as physical card or as soft card which e.g. is implemented in a mobile device. As with conventional payment methods with physical money electronic payment methods are prone to fraud. Wherein money could only be stolen once such that the damage of a theft of money is clearly defined, stealing of a physical credit card or just the credit card data can lead to unrestricted damage as the credit card can be used various time.

The effects of unauthorised financial transactions are at least unnecessary expenses for administrative task, but also financial damages due to fraud. Accordingly, there is a need to enhance the possibilities to prevent fraud.

### Summary of the invention

The present disclosure provides one or more solutions to the problems and disadvantages of the background art. Other technical advantages of the present disclosure will be readily apparent to one skilled in the art from the following description and claims.

The present disclosure is directed to a computer implemented method for altering the status of a payment card from a wallet application, the method comprising
- Selecting, in the wallet application on a user terminal, a payment card entry corresponding to a payment card;
- Selecting the designated status for the respective payment card;
- Prompting user authentication
- Sending, from the user terminal to a card network, an update status request, the update status request containing at least a payment card identifier, the designated status and an authorisation indicator.

The inventive method concerns a method for altering the status of a payment card from a wallet application on a user terminal. The user terminal could a mobile device, e.g. a cellular phone or tablet, or computer or the like. If the payment card, which could be a physical credit card or a soft card, is lost or stolen, the wallet application could be selected on the user terminal, wherein in the wallet application the data of the according payment card is deposited in the wallet application. In the wallet application different status option could be given, e.g. payment card cancelling, payment card limiting, temporarily disabling the payment card or the like. In order to secure the validity of altering the status of a payment card from a wallet application a user authentication is requested, e.g. by the wallet application. Such a authentication could be possible via password, biometric authentication or the like. When the authentication is successful an update status request is send from the user terminal to card network, wherein the update status request contains at least a payment card identifier, the designated status and an authorisation indicator.

The designated status corresponding to a payment card cancelling may cause hard blocking or soft blocking of the payment card. A hard blocking of a payment card would lead to a complete blocking of the payment card or payment card data, respectively. A re-validating of the payment card or the payment card data is not possible after the designated status is actively set to result in a hard blocking of respective payment card.

Alternatively, the designating status corresponding to a payment card could be set in a way resulting in a soft blocking. A soft blocking of the payment card or the payment card data could concern dedicated payment transactions. Such dedicated payment transaction could lead to the fact that the dedicated payment transaction is selected from the group consisting of point of sale terminal payments, ATM machine withdrawals, card not present transactions, and/or geo-specific or merchant specific transactions or the like. An additional or alternative type of soft blocking could be that the payment card is temporarily disabled. Additionally or alternatively could the soft blocking of the payment card or payment card data could lead to the situation that the payment card or payment card data could only be used at certain merchants, in certain territories and/or up to certain amounts.

In a further embodiment of the invention the update status request could also be sent to the card issuer. In yet a further embodiment the update status request is sent to the card issuer by the card network, responsive to receiving the update status request from the user terminal. This would allow the card issuer to react to the hard blocking or the soft blocking of the payment card or payment card data by restricting and/or rejecting any payment requests immediately.

In order to not to disrupt the possibility of making further payments for an unnecessary long time, it could be possible that an entity of the network of the card issuer upon receiving a hard blocking update status requests the issuance of a replacement payment card is automatically triggered. The automatic issuance of a replacement payment card could involve a automatic request of acknowledgement which is sent to the user terminal and needs to be confirmed by a user. Alternatively or in response to a positive acknowledgement by the user the creating of new payment card data and/or the printing of a new payment card could be automatically triggered.

In yet another embodiment of the invention soft blocking of the payment card could be reversed. This would again result in a situation in which the possibility of making further payments is not interrupted for an unnecessary long time. On the contrary, this would allow a great flexibility to adapt the status of the payment card on temporary needs like restricting the use for a subsidiary card which a third person like a teenager is using on the users account. However, this would mean that any subsidiary payment card is also included in the digital wallet of the user.

A very efficient way of reversal of the soft blocking of the payment card is requested in form of an update status request by
- Selecting, in the wallet application on the user terminal, the payment card entry corresponding to the soft blocked payment card;
- Selecting an updated designated status for the respective payment card;
- Prompting user authentication
- Sending, from the user terminal to the card network, an unblock update status request, the unblock update status request containing at least a unblock payment card identifier, the unblocking designated status and an unblock authorisation indicator.

Additionally, the reversal of the soft blocking of the payment card is done automatically on the basis of predefined parameters included in the unblock update status request. Such predefined parameters resulting in an automatic unblocking of the payment card could be selected from a group consisting of a specified time frame, specification of the geo location and specification of a sequence of transaction requests.

In order to provide an especially safe method, the user authentication necessary for changing the designated status could be based on biometric factors. Such biometric factors could be finger prints, an iris scans, facial contours and/or the like.

One technical advantage of the present invention is the possibility of an individual activating and deactivating of a payment card. The permanently deactivation of a payment card could be done by hard blocking and/or preliminary deactivation of a payment card could be done via soft blocking, e.g. by pressing a single button in the wallet application. Accordingly, activation of a payment card could be done be a reversal of the soft blocking, wherein the soft blocking of a payment card could be set by the payment card provider or the issuing bank for certain default conditions, e.g. that the payment card is deactivated for the use abroad e.g. by repressing the button or by pressing a different button in the wallet application.

Another aspect of the invention concerns a user terminal arranged to perform any of the method steps descripted above.

A yet other aspect of the invention concerns a computer program product comprising computer executable instructions embodied in a computer readable medium for performing any of the steps descripted above and/or which could be run on a user terminal as descripted above.

The invention is also directed to computer readable medium storing program instructions, which, when executed by a processor of a computer cause the computer to perform each of the method steps as descripted above.

Technical advantages of the present disclosure will be readily apparent to one skilled in the art from the following description of preferred embodiments and the claims. Various embodiments of the present application obtain only a subset of the advantages set forth. No single advantage is critical to the embodiments. Any claimed embodiment may be technically combined with any other claimed embodiments.

### Brief description of the Drawing

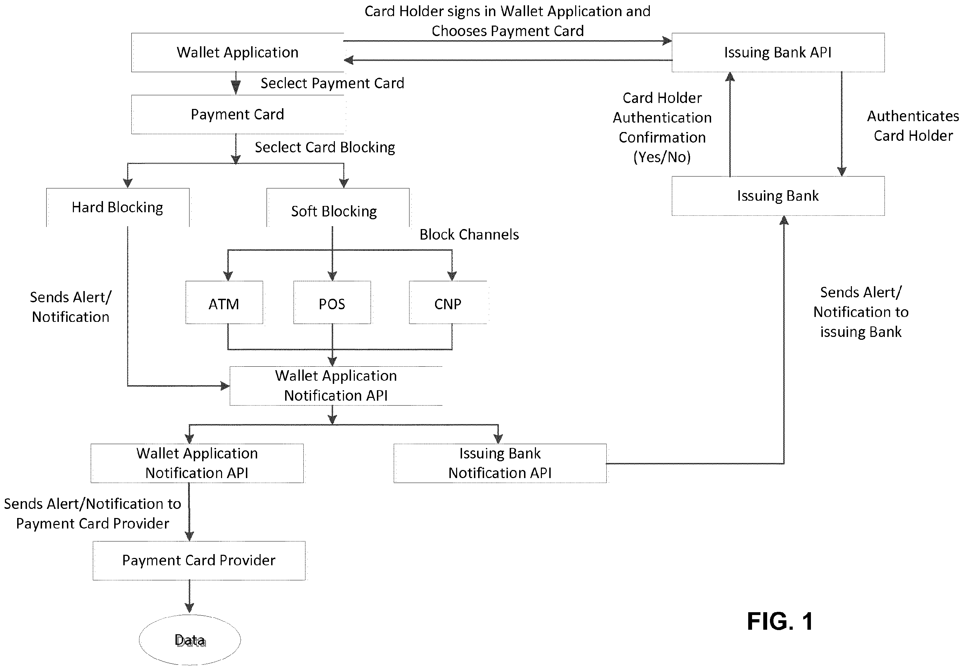

Fig.1 shows a flowchart of method for altering the status of a payment card from a wallet application.

The accompanying drawing illustrates an exemplary embodiment of the disclosure and serves to explain, by way of example, the principles of the disclosure.

### Detailed description

The present disclosure will now be described more fully hereinafter with reference to the accompanying figure, in which preferred embodiments are shown. The method, however, may be embodied in many different forms and should not be construed as limited to the embodiments set forth herein. It should be noted that the figure is intended to illustrate the general characteristics of the methods utilized in certain embodiments. However, the figure may not precisely reflect the precise structure or performance characteristic of any given embodiment. Moreover, in the figures like reference numerals designate corresponding parts throughout the different views or embodiments.

In a situation in which the authorised user notices that his/her credit card is missing gets worried. Often the authorised user is uncertain if the card is actually stolen or if it is just misplaced. To avoid the hassle to permanently blocking the card and need to wait for a replacement card to be issues meaning that time without the payment card needs to be bridged. The permanent blocking is usually done via an Interactive Voice Response (IVR) system or via a web portal of the issuing bank. To avoid this, the authorized user should be given the alternative solutions.

According an embodiment of the present invention a method for altering the status of a payment card, in the present case a credit card, from a wallet application, e.g. the MasterPass app, which is a mobile app on a mobile phone, is proposed. In the wallet application on a user terminal being the mobile phone, the according entry corresponding to a credit card is selected. Then the designated status for the missing credit card is selected. To ensure a secure operation a user authentication is prompted by asking the user to provide a finger to a sensor of the mobile phone such that the a finger print can be taken and compared with a finger print deposited at the computer system of issuing bank or the credit card provider. If the authentication is successful an update status request is sent from the mobile phone to a card network, wherein the update status request contains at least a payment card identifier, the designated status and an authorisation indicator. This allows an instant card blocking without the trouble of using a IVR system or finding the login credentials of a web inferface.

The designated status causes hard blocking or soft blocking of the payment card. Table 1 shows the effect the result of a hard blocking of when the payment card is a debit card and if the payment card is a credit card.

**Table 1**

| **Card Type** | **Hard Blocking** | **Alert/Notification** | **Output** |
|---|---|---|---|
| **Debit Card** | Yes | Yes | Transaction declined |
| **Credit Card** | Yes | Yes | Transaction declined |

In case of a hard blocking the credit card is requested in the wallet application, not only an alert notification is sent to a predetermined contact terminal, e.g. the mobile phone in which the wallet application is included via SMS, of the holder of the card but also the requested transaction is declined and the card is blocked for future transactions. In case of a hard blocking the credit card is permanently blocked and the issuing bank than take all necessary actions to re-issue immediately.

Table 2 shows an overview of the effects of the soft blocking of a debit or a credit card for transactions at Automatic Teller Machines (ATM), Point of Sales (POS) and Card Not Present (CNP) transactions, e.g. over the internet.

**Table 2**

| **Card Type** | **Transaction Channel** | **Soft Blocking** | **Alert/ Notification** | **Output** |
|---|---|---|---|---|
| **Debit Card** | ATM | Yes | Yes | Transaction declined |
| | POS | Yes | Yes | Transaction declined |
| | CNP | No | Yes | Transaction approved |
| **Credit Card** | ATM | Yes | Yes | Transaction declined |
| | POS | Yes | Yes | Transaction declined |
| | CNP | No | Yes | Transaction approved |

As can be taken from table 2 soft blocking of the credit card concerns dedicated payment transactions, only. The effect of the soft blocking depends on which dedicated payment transaction is concerned, wherein the dedicated payment transaction from the group consisting of point of sale terminal payments, ATM machine withdrawals, card not present transactions, and/or geo-specific or merchant specific transactions. Thus, a blocking of specific payment transaction channel such as payments of the internet can be blocked.

The update status request is not only sent to the issuing bank which issued the payment card but also is also sent to the card issuer allowing a more secure blocking of the payment card. The update status request is sent to the card issuer by the card network, responsive to receiving the update status request from the user terminal.

The soft blocking of the payment card can be reversed. The reversal of the soft blocking of the payment card is requested in form of an update status request. The request could be done automatically on the basis of predefined parameters included in the update status request. The predefined parameters specification is of a sequence of transaction requests that are unusual for the authorised user behaviour. This could be an increased number of ATM cash withdrawals at ATMs in different location.

This description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. Method for altering the status of a payment card from a wallet application, the method comprising
Selecting, in the wallet application on a user terminal, a payment card entry corresponding to a payment card;
Selecting the designated status for the respective payment card;
Prompting user authentication;
Sending, from the user terminal to a card network, an update status request, the update status request containing at least a payment card identifier, the designated status and an authorisation indicator.

2. Method according to claim 1, wherein the designated status causes hard blocking or soft blocking of the payment card.

3. Method according to claim 2, wherein soft blocking concerns dedicated payment transactions.

4. Method according to claim 3, wherein the dedicated payment transaction is selected from the group consisting of point of sale terminal payments, ATM machine withdrawals, card not present transactions, and/or geo-specific or merchant specific transactions.

5. Method according to one of the preceding claims, wherein the update status request is also sent to the card issuer.

6. Method according to claim 5, wherein the update status request is sent to the card issuer by the card network, responsive to receiving the update status request from the user terminal.

7. Method according to one of claims 2, 5 and 6, wherein receiving a hard blocking update status request triggers issuance of a replacement payment card.

8. Method according to one of claims 2 to 4, wherein soft blocking of the payment card can be reversed.

9. Method according to claim 8, wherein reversal of the soft blocking of the payment card is requested in form of an update status request according to the method of claim 1.

10. Method according to claim 9, wherein the reversal of the soft blocking of the payment card is done automatically on the basis of predefined parameters included in the update status request.

11. Method according to claim 10, wherein the predefined parameters are selected from a group consisting of a specified time frame, specification of the geo location and specification of a sequence of transaction requests.

12. Method according to one of the preceding claims, wherein the user authentication is based on biometric factors.

13. A user terminal arranged to perform the method steps of any one of claims 1 to 12.

14. A computer program product comprising computer executable instructions embodied in a computer readable medium for performing steps any of the method claims 1 to 11.

15. A computer readable medium storing program instructions, which, when executed by a processor of a computer cause the computer to perform each of the method steps of claims 1 to 11.
